# EUROPEAN PATENT SPECIFICATION

(11) **EP 2 883 382 B1**
(45) Date of publication and mention of the grant of the patent: **10.10.2018**
(21) Application number: 12882752.4
(22) Date of filing: 09.08.2012
(51) Int. Cl.: H04W 72/04, H04L 5/14

(54) **METHOD AND APPARATUS TO SUPPORT NEW SPECIAL SUB-FRAME IN LEGACY WIRELESS COMMUNICATION NETWORK**
VERFAHREN UND VORRICHTUNG ZUR UNTERSTÜTZUNG EINES NEUEN SPEZIELLEN SUBFRAMES IN EINEM DRAHTLOSEN LEGACY-KOMMUNIKATIONSNETZ
PROCÉDÉ ET APPAREIL POUR PRENDRE EN CHARGE UNE NOUVELLE SOUS-TRAME SPÉCIALE DANS UN RÉSEAU DE COMMUNICATION SANS FIL EXISTANT

(43) Date of publication of application: 17.06.2015
(73) Proprietor: Telefonaktiebolaget LM Ericsson (publ), 164 83 Stockholm (SE)
(72) Inventor: NIE, Jingyue, Beijing 100102 (CN); SONG, Xinghua, Beijing 100102 (CN); XIAO, Lei, Beijing 100083 (CN); ZHU, Huaisong, Beijing 100012 (CN)
(74) Representative: Ström & Gulliksson AB
(86) International application number: PCT/CN2012/001067
(87) International publication number: WO 2014/022949

(56) References cited:
- WO-A1-2012/065287
- WO-A1-2012/119309
- CN-A- 101 558 671
- US-A1- 2009 180 410
- US-A1- 2010 322 154
- US-A1- 2011 176 461
- US-A1- 2012 044 841
- RENESAS MOBILE EUROPE: "Signaling and Procedure to Support Additional Special Subframe Configuration", 3GPP DRAFT; R2-12224 SIGNALING PROCEDURE TO SUPPORT ADDITIONAL SPECIAL SUBFRAME CONFIGURATION_V1.0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech; 20120521 - 20120525, 15 May 2012 (2012-05-15), XP050607200, [retrieved on 2012-05-15]
- ST-ERICSSON ERICSSON: "Discussion on additional special subframe configuration for LTE TDD Document for: Discussion and Decision", 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 26 March 2012 (2012-03-26), XP055235468, http://www.3gpp.org/DynaReport/TDocExMtg-- R1-68b--29001.htm
- CMCC: "Discussion on additional special subframe configuration", 3GPP DRAFT; R1-121712_DISCUSSION ON ADDITIONAL SPECIAL SUBFRAME CONFIGURATION-JEJU-REV4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, Korea; 20120326 - 20120330, 20 March 2012 (2012-03-20), XP050599971, [retrieved on 2012-03-20]

## Description

### TECHNICAL FIELD

The present technology generally relates to wireless communication, particularly to a method and apparatus to support new special sub-frame (SSF) in legacy wireless communication network.

### BACKGROUND

With the rapid evolution of the radio network, coexistence of new wireless communication network and the legacy wireless network becomes concerns especially by the telecommunication operators out of the technique and business considerations, such as the balance between the investment on the new generation network and the maintenance of the legacy network.

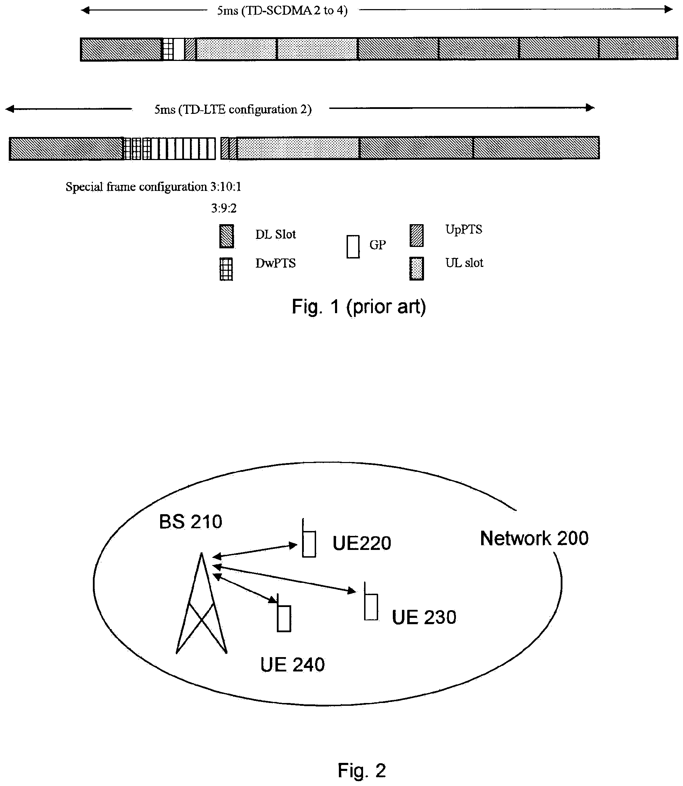

Take the Time Division Long Term Evolution (TD-LTE) and Time Division Synchronous Code Division Multiple Access (TD-SCDMA) as example, coexistence of TD-LTE and TD-SCDMA is addressed in 3GPP, which results in different special sub-frame (SSF) configuration. The SSF configuration contains both portions of downlink, i.e. Downlink Pilot Time Slot (DwPTS) and uplink transmissions, i.e. Uplink Pilot Time Slot (UpPTS) separated by a portion of unused symbols in the middle of the sub-frame i.e Guard Period (GP). As illustrated in Fig. 1, TD-LTE frame structure type-2 uplink-downlink configuration #2 (1:3) is applied to align the uplink (UL) and downlink (DL) switching point, and the special sub-frame configuration 0 (also referred to as special sub-frame pattern (SSP) 0) or configuration 5 (also referred to as SSP 5) with normal cyclic prefix (CP) in TD-LTE is applied so as to not impact the TD-SCDMA network. As known to the art, for SSP 0, the proportion of symbol number for DwPTS:GP:UpPTS is 3:10:1, and for SSP 5, the proportion of symbol number for DwPTS:GP:UpPTS is 3:9:2.

In order to maximize the DL throughput and align the TD-SCDMA's GP and TD-LTE's GP as much as possible, 3GPP RANI WG has decided to add new special sub-frame pattern 9 (SSP 9) for normal CP and new pattern 7 (SSP 7) for extended in 3GPP Release 11 standard. In particular, for SSP 9, DwPTS:GP:UpPTS is 6:6:2. Hereby, in a cell utilizing SSP 5, there are total 33 symbols used for DL Physical Downlink Shared Channel (PDSCH) (per 5ms), whereas in a cell utilizing SSP 9, there are 3 additional symbols from DwPTS used for PDSCH (per 5ms), since DwPTS is assigned 3 symbols (per 5 ms) in SSP 5, and 6 symbols (per 5 ms) in SSP 9. As seen, the SSP 9 can bring system throughput gain (or DL capacity increase) around 10% (= 3/33).

Now the LTE operators are interested in deploying the new SSP in legacy LTE network (Release 8, 9 or 10) to enjoy 10% capacity gain. In order to make the new SSP work in legacy network, one conventional way is to modify the UU signaling, more accurately ASN.1. However, as known, ASN.1 has been frozen yet, in this case, new features incurred ASN.1 impact will not be accepted by 3GPP anymore, and hence this approach is not feasible.

In Renesas Mobile Europe:"Signaling and procedure to support additional special subframe configuration", 3GPP draft R2-122224, 3GPP TSG-RAN WG2 Meeting #78, Prague, Czech, 21th - 25th May 2012, there is disclosed that a eNB does not send any signaling but just lets a new UE also try to detect DL assignment even if the special subframe configuration is #5.

Further background information relating to different subframe configurations may be obtained in WO2012/065287, WO2012/119309, ST-Ericsson, Ericsson: "Discussion on additional special subframe configuration for LTE TDD", 3GPP draft R1-121402, 3GPP TSG-RAN WG1 Meeting #68bis, Jeju, Korea, 26th - 30th March 2012 and CMCC: "Discussion on additional subframe configuration" 3GPP draft R1-122712, 3GPP TSG-RAN WG1 Meeting #68bis, Jeju, Korea, 26th - 30th March 2012.

### SUMMARY

Therefore, it is an object to solve at least one of the above-mentioned problems.

According to an aspect of the embodiments, there is provided a method for use in a User Equipment (UE) to utilize a new Special Sub-Frame (SSF) in a legacy Time Division Duplex (TDD) cellular network, the UE is enabled to support the new SSF, the method comprises: receiving a legacy SSF configuration notification from a Base Station (BS) serving the UE and taking the legacy SSF configuration as the corresponding new SSF configuration; receiving a scheduled downlink transmission from the BS; processing the scheduled downlink transmission on the basis of the assumption that the SSF in the scheduled downlink transmission is the new SSF; and when the SSF in the scheduled downlink transmission is actually the new SSF, the UE will be triggered to transmit a response to the BS after processing the scheduled downlink transmission. The method further comprises: detecting symbol energy in the DwPTS of the SSF in the received downlink transmission; if the symbol energy exceeds a threshold higher than the symbol energy in the DwPTS of the legacy SSF, determining that the SSF in the received downlink transmission is the new SSF and wherein the processing the scheduled downlink transmission step comprises: processing the scheduled downlink transmission on the basis of the determination that the SSF in the received downlink transmission is the new SSF.

According to another aspect of the embodiments, there is provided a User Equipment (UE) utilizing a new Special Sub-Frame (SSF) in a legacy Time Division Duplex (TDD) cellular network, the UE is enabled to support the new SSF and comprises: a receiver adapted to receive a legacy SSF configuration notification from a Base Station (BS) serving the UE and take the legacy SSF configuration as the corresponding new SSF configuration, and adapted to receive a scheduled downlink transmission from the BS; a processor adapted to process the scheduled downlink transmission on the basis of the assumption that the SSF in the scheduled downlink transmission is the new SSF; and a responding circuit adapted to transmit a response to the BS after processing the scheduled downlink transmission, if the SSF in the scheduled downlink transmission is actually the new SSF. The UE is configured to detect symbol energy in the DwPTS of the SSF in the received downlink transmission; if the symbol energy exceeds a threshold higher than the symbol energy in the DwPTS of the legacy SSF, determine that the SSF in the received downlink transmission is the new SSF; and wherein the UE is configured to process the scheduled downlink transmission by processing the scheduled downlink transmission on the basis of the determination that the SSF in the received downlink transmission is the new SSF.

According to a further example, there is provided a communication system comprising a BS and a UE as described above.

A new SSF enabled BS disguises the new SSF configuration as a corresponding legacy SSF configuration and notifies the UEs that their communication with the BS will be performed by means of the legacy SSF configuration, then perform a downlink (DL) transmission with the new SSF instead of the legacy SSF therein, thereby determine whether the UE that the transmission is directed to is enabled to support the new SSF, since the new SSF enabled UE will always take the notified legacy SSF configuration as the new SSF configuration, and thus can process the new SSF in DL transmission and make a response, whereas the UE that is not enabled to support the new SSF simply takes the new SSF in the DL transmission as the legacy SSF, and will not take the expected action to the new SSF , thereby no response will be made. In this way, the new SSF enabled BS will know whether the UE is enabled to support the new SSF, thereby the communication by means of the new SSF between the new SSF enabled BS and the new SSF enabled UE in the legacy radio network is accomplished without introducing any implementation which is not allowed by 3GPP rules.

### BRIEF DESCRIPTION OF THE DRAWINGS

The technology will now be described, by way of example, based on embodiments with reference to the accompanying drawings, wherein:
Fig. 1 illustrates the frame structure configurations of the TD-LTE and TD-SCDMA due to the coexistence of TD-LTE and TD-SCDMA in the wireless communication system;
Fig. 2 illustrates a schematic view of a wireless communication network environment suitable for in implementing an embodiment.
Fig. 3 illustrates a flowchart of a method for use in a BS to utilize a new SSF in a TDD cellular network in accordance with an embodiment;
Fig. 4 illustrates a flowchart of a method for use in a UE to utilize a new SSF in a TDD cellular network in accordance with an embodiment;
Fig. 5 illustrates an interaction diagram between the BS and the UE in accordance with an embodiment; and
Fig. 6 illustrates a block diagram of the BS and the UE in a TDD cellular network in accordance with an embodiment.

### DETAILED DESCRIPTION

Embodiments herein will be described more fully hereinafter with reference to the accompanying drawings, in which embodiments are shown. This embodiments herein may, however, be embodied in many different forms and should not be construed as limited to the embodiments set forth herein. Like numbers refer to like elements throughout.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood. It will be further understood that terms used herein should be interpreted as having a meaning that is consistent with their meaning in the context of this specification and the relevant art and will not be interpreted in an idealized or overly formal sense unless expressly so defined herein.

The present technology is described below with reference to block diagrams and/or flowchart illustrations of methods, apparatus (systems) and/or computer program products according to the present embodiments. It is understood that blocks of the block diagrams and/or flowchart illustrations, and combinations of blocks in the block diagrams and/or flowchart illustrations, may be implemented by computer program instructions. These computer program instructions may be provided to a processor, controller or controlling circuit of a general purpose computer, special purpose computer, and/or other programmable data processing apparatus to produce a machine, such that the instructions, which execute via the processor of the computer and/or other programmable data processing apparatus, create means for implementing the functions/acts specified in the block diagrams and/or flowchart block or blocks.

Accordingly, the present technology may be embodied in hardware and/or in software (including firmware, resident software, micro-code, etc.). Furthermore, the present technology may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that may contain, store, communicate, propagate, or transport the program for use by or in connection with the instruction execution system, apparatus, or device.

Although the technology herein is described with reference to the LTE communication network in the context, it should understand that the embodiments are not limited to this, but may indeed be applied to all suitable wireless communication networks involved in the new SSF support. Although specific terms in some specifications are used here, such as base station, it should be understand that the embodiments are not limited to those specific terms but may be applied to all similar entities, such as macro base station, femto base stations, NodeB, eNodeB and Core Network (CN).

Take the legacy TD-LTE network (e.g. LTE Release 8/9/10) as example, typically the legacy SSF pattern 5 (SSP 5) is widely used in the legacy TD-LTE network which does not support the new SSF pattern 9 (SSP 9) introduced in LTE Release 11. In other words, in the legacy network, the legacy UE and BS that are not enabled to support the SSP 9 simply communicate with each other using the SSP 5, while the UE and BS that both are enabled to support the SSP 9 also have no way to communicate with each other using the SSP 9 without modifying the UU signaling format standard (i.e. ASN.1). As a result, the legacy network can not benefit from the DL capacity increase incurred by the SSP 9.

Embodiments herein will be described below with reference to the drawings.

Fig. 2 illustrates a schematic view of a wireless communication network environment suitable for in implementing an embodiment.

As shown in Fig.2, the wireless communication network 200 comprises the AP 210 and three UEs 220, 230 and 240. In operation, the UL transmission and the DL transmission are performed between the BS and the UE. The UL/DL transmission contains the SSF such as the SSF with SSP 5, the SSF with SSP 9 etc. The term "BS" used herein may indicate any type of communication node, such as macro base station, femto base station, eNB, NodeB and so on. The term "UE" used herein may indicates all forms of devices enabling the user to communicate via wireless communication network, such as, smart phones, cellular phone, Personal Digital Assistant (PDA), and the like. The wireless communication network comprises, but not limited to, the TD-LTE network. For simplicity and clarity, only one AP and three UEs are shown in the wireless communication network 200, it will be appreciated that one or more APs may exist in the wireless communication network, and each AP may serve one or more UEs in the mean time.

Meanwhile, for convenience of explanation on the embodiments, it is assumed that BS 210 and the UE 220, 230 are enabled to support the new SSF, and the UE 240 is not enabled to support the new SSF herein.

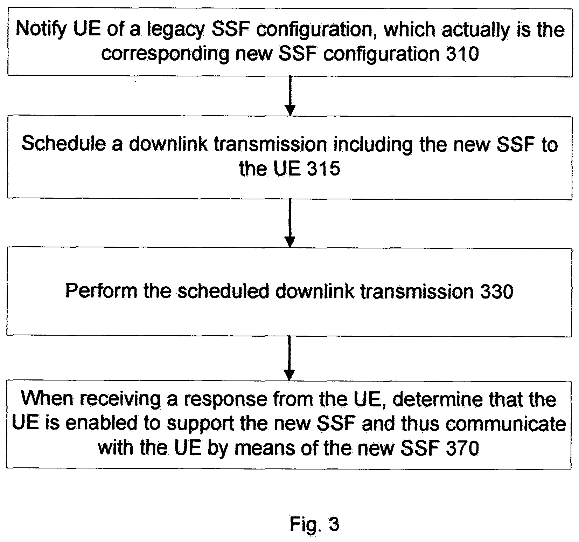

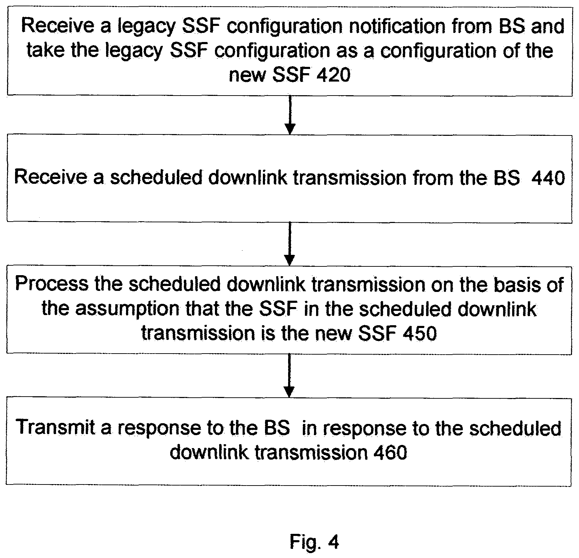

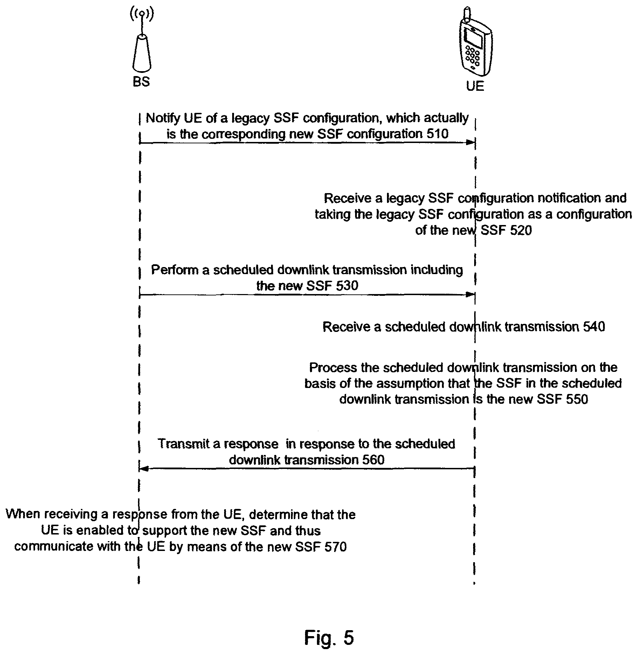

Fig. 3 illustrates a flowchart of a method for use in a BS to utilize a new SSF in a TDD cellular network in accordance with an embodiment; Fig. 4 illustrates a flowchart of a method for use in a UE to utilize a new SSF in a TDD cellular network in accordance with an embodiment; and Fig. 5 illustrates an interaction diagram between the BS and the UE in accordance with an embodiment. For purpose of clarity, the embodiment will be described with reference to the Fig.5, however it should be appreciated that the processes in Fig.3 and Fig.4 can be independently performed by the BS and the UE respectively.

In step 510, the BS 210 may notify one or more UEs (e.g. 220-240) served by the BS of a legacy SSF configuration, which actually is the corresponding new SSF configuration. Here, the legacy SSF configuration represents the SSP, like SSP 5 for normal cyclic prefix (CP), that can be recognized and supported in the legacy TDD network, and the new SSF configuration represents the SSP, like SSP 9 for extended CP, that can not be recognized and supported in the legacy TDD network yet. For this reason, the new SSF configuration can not be directly notified to the UEs. Hence, the BS 210 disguises the new SSF configuration as the corresponding legacy SSF configuration. That is to say, the BS 210 notifies the UEs that their communication with the BS will be performed by means of the legacy SSF configuration, but in fact it will perform the DL transmission to the UEs with the new SSF configuration. It is noted that there may exist predetermined correspondence between the legacy SSF configuration and the new SSF configuration. Take the SSP 5 and SSP 9 as example, the new SSF with SSP 9 and the legacy SSF with SSP 5 used in the DL transmission can be processed in the similar manner by the UEs, the difference between them is the proportion of DwPTS:GP:UpPTS. For the SSP 9, the DwPTS:GP:UpPTS is 6:6:2, while for the SSP 5, the DwPTS:GP:UpPTS is 3:9:2. On the other hand, the notification from the BS can be implemented in different ways. For one example, the BS may broadcast the legacy SSF configuration to all the UEs served by the BS. For another example, the BS may multicast the legacy SSF configuration to several designated UEs.

Herein, the SSP 5 is used as the legacy SSF configuration and the SSP 9 is used as the new SSF configuration by way of example, it will be appreciated the legacy SSF configuration and the new SSF configuration are not limited to this. For example, the legacy SSF configuration can be the SSP 4 for extended CP and the corresponding new SSF configuration can be the SSP 7 for extended CP.

In step 520, the new SSF enabled UE (e.g. UE 220) receives the legacy SSF configuration notification transmitted by the BS 210 in the step 510 and takes the legacy SSF configuration as the corresponding new SSF configuration. Specifically, upon receiving the specific legacy SSF configuration (e.g. SSP 5) from the BS, the UE 220 will be set to hold that the BS actually intends to communicate with it by means of the new SSF configuration, i.e. SSP 9, thus determine to process the SSF in the DL transmission as if it is the new SSF despite that the SSF actually may be the legacy SSF.

Subsequently, in step 530, the BS 210 may schedule a DL transmission which includes the new SSF, and perform the DL transmission to the UE (e.g. 220) according to the scheduling. Optionally, in the DL transmission, the DwPTS of the new SSF may comprise two portions: the DL scheduling command and the corresponding payload data. The scheduling command contains the information on the payload data, such as the start point of the payload data, the length of the payload data in the frame. Take the SSP 9 as example, there are 6 symbols DwPTS in SSP 9, the DL scheduling command may occupy 1-3 symbols and the remains pertain to the payload data. By contrast, in the DwPTS of the legacy SSP 5, there is no DL scheduling command. Note that the DL scheduling and transmission from the BS 210 to the UE 220 can be implemented in any conventional approach in the art, which will not be described in detail for brevity.

In step 540, The UE 220 receives the DL transmission transmitted by the BS 210 in step 530. If the DL transmission is not directed to it, the UE 220 simply discards the DL transmission, otherwise keeps it.

And then, in step 550, the UE 220 processes the received downlink transmission on the basis of the assumption that the SSF in the scheduled downlink transmission is the new SSF, and if the SSF in the downlink transmission is actually the new SSF, the UE 220 will be triggered to transmit a response to the BS 210 after processing the scheduled downlink transmission (step 560). Specifically, since the UE 220 has received the notification of the legacy SSF configuration, it will automatically take the legacy SSF configuration as the corresponding new SSF configuration. As a result, the UE 220 will process the SSF in the DL transmission in new SSF configuration way.

For example, the UE 220 tries to retrieve the DL scheduling command from DwPTS in the SSF of the DL transmission. If the SSF is actually the new SSP 9, then the UE 220 will successfully get the DL scheduling command, and thereby retrieve the corresponding payload data in the DwPTS according to the DL scheduling command, which may contain the information on the start location of the payload data in the SSF and the length of the payload data. Upon obtaining the payload data, the UE 220 may send an ACK message to the BS 210. Conversely, if the UE 220 fails in retrieving the payload data, the UE 220 may send a NACK message to the BS 210.

It should be appreciated that the above way of processing the SSF and responding to the BS is described by way of example, and any other suitable ways can be applied to the embodiment.

Subsequently, in step 570, when receiving the response such as the ACK/NACK message in the uplink transmission from the UE 220, the BS 210 is able to determine that the UE 220 is enabled to support the new SSF, and thus will communicate with the UE 220 by means of the new SSF.

According to the embodiment, the communication by means of the new SSF between the new SSF enabled BS and the new SSF enabled UE in the legacy wireless communication network is accomplished without introducing any implementation rejected by 3GPP rules. Thereby, the legacy network can enjoy the benefit introduced by the new SSF, for example the DL capacity increase around 10% incurred by the SSP 9.

In an embodiment, if the UE is not enabled to support the new SSF like UE 240, when receiving the legacy SSF configuration (e.g. SSP 5) notification broadcasted by the BS 210, the UE 220 will simply take it as granted that the BS actually intends to communicate with it by means of the legacy SSF configuration. Thus, upon receiving the DL transmission including the new SSF transmitted by the BS 210, the UE 220 will assume that the SSF included in DL transmission is the legacy SSF, though the SSF may actually be the new SSF, and process the SSF in legacy SSF configuration (i.e. SSP 5) way. However, the SSP 5 is not configured with the DL scheduling command in the DwPTS, thus the UE 240 will overlook the DL scheduling command in the DwPTS of the SSF in the DL transmission. Consequently, the UE 240 is not triggered to make any response to the BS 210. On the BS 210 side, when failing in receiving the response sent from the UE 240 over a threshold period, the BS 210 may determine that the UE 240 is not enabled to support the new SSF, and thus communicate with the UE 240 by means of the legacy SSF later.

In this way, the new SSF enabled BS can communicate with the new SSF enabled UE by means of the new SSF, while it also can communicate with the UE that is not enabled to support the new SSF by means of the legacy SSF. As seen, the new SSF is smoothly utilized in the legacy network without introducing any trouble to this network.

Optionally, if the BS 210 does not receive the response from the UE in response to the DL transmission including the new SSF, it may repeat the DL transmission with the increased transmit power to ensure that the UE is able to receive the DL transmission successfully. In this case, if the BS 210 still fails in receiving the response from the UE after repeating the DL transmission up to predetermined times, it may determine that the UE is not enabled to support the new SSF, and thus communicate with the UE by means of the legacy SSF later.

Optionally, if the new SSF enabled UE (e.g. UE 220) receive a DL transmission with a SSF actually is the legacy SSF with SSP 5 instead of the new SSF with SSP 9(the DL transmission may be transmitted by the legacy BS not enabled to support the new SSF), the UE 220 may still try to retrieve the DL scheduling command from DwPTS in the SSF of the DL transmission. As known from the discussion above, the UE 220 will not get it, since there is no such DL scheduling command in the DwPTS of the legacy SSF at all. Hence, the UE 220 will not be triggered to transmit the response to the BS, and thereby the new SSF supporting in the legacy network will also not cause adverse impact on the legacy BSs.

In a further embodiment, the new SSF enabled UE detects symbol energy in the DwPTS of the SSF in the received downlink transmission from the BS. If the symbol energy exceeds a threshold higher than the symbol energy in the DwPTS of the legacy SSF, the UE determines that the SSF in the received downlink transmission is the new SSF. And, the UE will process the scheduled downlink transmission only when it is determined that the SSF in the received downlink transmission is the new SSF, otherwise the UE takes no action to the SSF.

Specifically, when receiving the DL transmission, the UE does not try to retrieve the data contained in the SSF of the DL transmission firstly, instead finding the starting location of the DwPTS of the SSF in the received DL transmission and detecting the symbol energy until it arrives at the starting location of the GP, as shown in Fig. 1, the SSF contains the DwPTS, GP and UpPTS in turn. In this way, the UE can obtain the symbol energy of the DwPTS. Since the new SSF has higher DwPTS symbol energy than the legacy one, the UE may determine the DL transmission includes the new SSF as long as the detected symbol energy is higher than the predetermined threshold.

For example, as mentioned above, the new SSF with SSP 9 has 6 symbols for DwPTS, while the legacy SSF with SSP 5 only has 3 symbols for DwPTS, hence if the detected symbol energy in DwPTS of the SSF is twice higher than the symbol energy in DwPTS of the legacy SSF with SSP 5, the UE can determine that the SSF included in the DL transmission is indeed the new SSF with SSP 9. The symbol energy detection is known to the skilled in the art, which will not be described in more detail here.

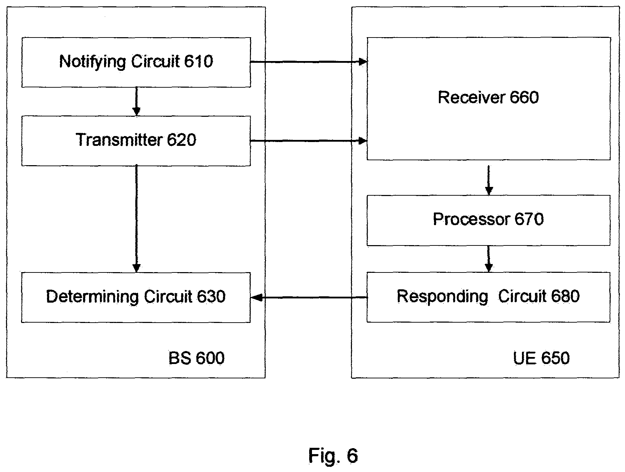

As illustrated in the Fig 6, the BS 600 may comprise the notifying circuit 610, the transmitter 620 and the determining circuit 630. The UE 650 may comprise the receiver 660, processor 670 and responding circuit 680. It is noted that the above elements in the BS 600 and the UE 650 can be implemented separately or as a single element. It should also be appreciated that it does not exclude the presence of other elements not shown for other purposes of utility in the BS 600 and the UE 650. In the following, the functions of the above elements will be described with reference to the Fig. 6.

The notifying circuit 610 in the BS 600 may notify one or more UEs (e.g. UE 650) served by the BS of a legacy SSF configuration, which actually is the corresponding new SSF configuration. Here, the legacy SSF configuration represents the SSP, like SSP 5 for normal cyclic prefix (CP), that can be recognized and supported in the TDD network, and the new SSF configuration represents the SPP, like SSP 9 for extended CP, that can not be recognized and supported in the TDD network yet. For this reason, the new SSF configuration can not be directly notified to the UEs. Hence, the notifying circuit 610 disguises the new SSF configuration as the corresponding legacy SSF configuration. That is to say, the notifying circuit 610 notifies the UEs that their communication with the BS will be performed by means of the legacy SSF configuration, but in fact it will perform the DL transmission to the UEs with the new SSF configuration. It is noted that there may exist predetermined correspondence between the legacy SSF configuration and the new SSF configuration. Take the SSP 5 and SSP 9 as example, the new SSF with SSP 9 and the legacy SSF with SSP 5 used in the DL transmission can be processed in the similar manner by the UEs, the difference between them is the proportion of DwPTS:GP:UpPTS. For the SSP 9, the DwPTS:GP:UpPTS is 6:6:2, while for the SSP 5, the DwPTS:GP:UpPTS is 3:9:2. On the other hand, the notification from the notifying circuit 610 can be implemented in different ways. For one example, the notifying circuit 610 may broadcast the legacy SSF configuration to all the UEs served by the BS. For another example, the notifying circuit 610 may multicast the legacy SSF configuration to several designated UEs.

Herein, the SSP 5 is used as the legacy SSF configuration and the SSP 9 is used as the new SSF configuration by way of example, it will be appreciated the legacy SSF configuration and the new SSF configuration are not limited to this. For example, the legacy SSF configuration can be the SSP 4 for extended CP and the new SSF configuration can be the SSP 7 for extended CP.

The receiver 660 in the new SSF enabled UE 650 receives the legacy SSF configuration notification transmitted by the BS 600 and takes the legacy SSF configuration as the corresponding new SSF configuration. That is to say, upon receiving the specific legacy SSF configuration (e.g. SSP 5) from the BS, The receiver 660 will be set to hold that the BS actually intends to communicate with it by means of the new SSF configuration, i.e. SSP 9, thus determine to process the SSF in the DL transmission as if it is the new SSF despite that the SSF actually is the legacy SSF.

Subsequently, the transmitter 620 in the BS 600 may schedule a DL transmission which includes the new SSF, and perform the DL transmission to the UE 650. Optionally, in the DL transmission, the DwPTS of the new SSF may comprise two portions: the DL scheduling command and the corresponding payload data. The scheduling command contains the information on the payload data, such as the start point of the payload data, the length of the payload data in the frame. Take the SSP 9 as example, there are 6 symbols DwPTS in SSP 9, the DL scheduling command may occupy 1-3 symbols and the remains pertain to the payload data. By contrast, in the DwPTS of the legacy SSP 5, there is no DL scheduling command. Note that the DL scheduling and transmission from the BS 600 to the UE 650 can be implemented in any conventional approach in the art, which will not be described in detail for brevity.

Then the receiver 660 in the UE 650 receives the DL transmission transmitted by the BS 600. If the DL transmission is not directed to it, the receiver 660 simply discards the DL transmission, otherwise keeps it.

And then, the processor 670 in the UE 650 processes the received downlink transmission by the receiver 660 on the basis of the assumption that the SSF in the scheduled downlink transmission is the new SSF, and if the SSF in the downlink transmission is actually the new SSF, the responding circuit 680 in the UE 650 will be triggered to transmit a response to the BS 600 after the processor 670 processes the scheduled downlink transmission. Specifically, since the UE 650 has received the notification of the legacy SSF configuration, it will automatically take the legacy SSF configuration as the corresponding new SSF configuration. As a result, the processor 670 will process the SSF in the DL transmission in new SSF configuration way.

For example, the processor 670 tries to retrieve the DL scheduling command from DwPTS in the SSF of the DL transmission. If the SSF is actually the new SSP 9, then the processor 670 will successfully get the DL scheduling command, and thereby retrieve the corresponding payload data in the DwPTS according to the DL scheduling command, which may contain the information on the start location of the payload data in the SSF and the length of the payload data. Upon obtaining the payload data, the responding circuit 680 may send an ACK message to the BS 600. Conversely, if the processor 670 fails in retrieving the payload data, the responding circuit 680 may send a NACK message to the BS 600.

Subsequently, when receiving the response such as the ACK/NACK message in the uplink transmission from the UE 650, the determining circuit 630 in the BS 600 is able to determine that the UE 650 is enabled to support the new SSF, and thus will communicate with the UE 650 by means of the new SSF.

According to the embodiment, the communication by means of the new SSF between the new SSF enabled BS and the new SSF enabled UE in the legacy wireless communication network is accomplished without introducing any implementation rejected by 3GPP rules. Thereby, the legacy network can enjoy the benefit introduced by the new SSF, for example the DL capacity increase around 10% incurred by the SSP 9.

In an embodiment, if a UE is not enabled to support the new SSF, when receiving the legacy SSF configuration (e.g. SSP 5) notification broadcasted by the BS 600, the UE will simply take it as granted that the BS actually intends to communicate with it by means of the legacy SSF configuration. Thus, upon receiving the DL transmission including the new SSF transmitted by from the BS 600, the UE will assume that the SSF included in DL transmission is the legacy SSF, though the SSF may actually be the new SSF, and process the SSF in legacy SSF configuration (i.e. SSP 5) way. However, the SSP 5 is not configured with the DL scheduling command in the DwPTS, thus the UE will overlook the DL scheduling command in the DwPTS of the SSF in the DL transmission. Consequently, the UE is not triggered to make any response to the BS 600. On the BS 600 side, when failing in receiving the response sent from the UE over a threshold period, the BS 600 may determine that the UE is not enabled to support the new SSF, and thus communicate with the UE by means of the legacy SSF later.

In this way, the new SSF enabled BS can communicate with the new SSF enabled UE by means of the new SSF, while it also can communicate with the UE that is not enabled to support the new SSF by means of the legacy SSF. As seen, the new SSF is smoothly utilized in the legacy network without introducing any trouble to this network.

In a further embodiment, the new SSF enabled UE detects symbol energy in the DwPTS of the SSF in the received downlink transmission from the BS. If the symbol energy exceeds a threshold higher than the symbol energy in the DwPTS of the legacy SSF, the UE determines that the SSF in the received downlink transmission is the new SSF. And, the UE will process the scheduled downlink transmission only when it is determined that the SSF in the received downlink transmission is the new SSF, otherwise the UE takes no action to the SSF.

Specifically, when receiving the DL transmission, the UE does not try to retrieve the data contained in the SSF of the DL transmission firstly, instead finding the starting location of the DwPTS of the SSF in the received DL transmission and detecting the symbol energy until it arrives at the starting location of the GP, as shown in Fig. 1, the SSF contains the DwPTS, GP and UpPTS in turn. In this way, the UE can obtain the symbol energy of the DwPTS. Since the new SSF has higher DwPTS symbol energy than the legacy one, the UE may determine the DL transmission includes the new SSF as long as the detected symbol energy is higher than the predetermined threshold.

For example, as mentioned above, the new SSF with SSP 9 has 6 symbols for DwPTS, while the legacy SSF with SSP 5 only has 3 symbols for DwPTS, hence if the detected symbol energy in DwPTS of the SSF is twice higher than the symbol energy in DwPTS of the legacy SSF with SSP 5, the UE can determine that the SSF included in the DL transmission is indeed the new SSF with SSP 9. The symbol energy dection is known to the skilled in the art, which will not be described in more detail here.

While the embodiments have been illustrated and described herein, it will be understood by those skilled in the art that various changes and modifications may be made, and equivalents may be substituted for elements thereof without departing from the scope of the present technology as defined by the claims. In addition, many modifications may be made to adapt to a particular situation and the teaching herein without departing from its central scope. Therefore it is intended that the present embodiments not be limited to the particular embodiment disclosed as the best mode contemplated for carrying out the present technology, but that the present embodiments include all embodiments falling within the scope of the appended claims.

## Claims

1. A method for use in a **U**ser **E**quipment, UE (220-240, 650), to utilize a new **S**pecial **S**ub-**F**rame, SSF, in a **T**ime **D**ivision **D**uplex, TDD, cellular network (200), wherein the TDD cellular network (200) is a Time Division - Long Term Evolution, TD-LTE, network, and wherein the UE (220-240, 650) is enabled to support the new SSF, the method comprising:
- Receiving (420, 520) a legacy SSF configuration notification from a **B**ase **S**tation, BS (210, 600), serving the UE (220-240, 650);
- Receiving (440, 540) a scheduled downlink transmission with the new SSF from the BS (210, 600);
- Processing (450, 550) the scheduled downlink transmission on the basis of an assumption that the SSF in the scheduled downlink transmission is the new SSF; and
- When the SSF in the scheduled downlink transmission is actually the new SSF, a response (460, 560) will be triggered to transmit to the BS (210, 600) after processing the scheduled downlink transmission; **characterized by:**
- Detecting symbol energy in the Downlink Pilot Time Slot, DwPTS, of the SSF in the received downlink transmission;
- If the symbol energy exceeds a threshold higher than a symbol energy in the DwPTS of the legacy SSF, determining that the SSF in the received downlink transmission is the new SSF;
wherein the processing the scheduled downlink transmission step (450, 550) comprises: processing the scheduled downlink transmission on the basis of the determination that the SSF in the received downlink transmission is the new SSF.

2. The method of the claim 1, wherein the new SSF is configured with a downlink scheduling command present in the **D**ownlink **P**ilot **T**ime **S**lot,DwPTS, and the legacy SSF is not configured with the downlink scheduling command in the DwPTS, wherein when the SSF in the scheduled downlink transmission is actually the new SSF, a response (460, 560) will be transmitted to the BS (210, 600) after processing the downlink scheduling command in the DwPTS of the new SSF of scheduled downlink transmission.

3. The method of the claim 2, the method further comprising:
- When the SSF in the scheduled downlink transmission is actually the legacy SSF, no response will be transmitted to the BS (210, 600) due to no downlink scheduling command to be processed in the legacy SSF.

4. A **U**ser **E**quipment, UE, utilizing a new **S**pecial **S**ub-**F**rame, SSF, in a **T**ime **D**ivision **D**uplex, TDD, cellular network, wherein the TDD cellular network (200) is a Time Division - Long Term Evolution, TD-LTE, network, and wherein the UE is enabled to support the new SSF, the UE comprising:
A receiver(660) adapted to receive a legacy SSF configuration notification from a **B**ase **S**tation, BS, serving the UE, and adapted to receive a scheduled downlink transmission with the new SSF from the BS;
A processor (670) adapted to process the scheduled downlink transmission on the basis of an assumption that the SSF in the scheduled downlink transmission is the new SSF;
A responding circuit (680) adapted to, when the SSF in the scheduled downlink transmission is actually the new SSF, transmit a response to the BS after processing the scheduled downlink transmission;
**characterized in that** the UE is configured to:
- Detect symbol energy in the Downlink Pilot Time Slot, DwPTS, of the SSF in the received downlink transmission;
- If the symbol energy exceeds a threshold higher than a symbol energy in the DwPTS of the legacy SSF, determine that the SSF in the received downlink transmission is the new SSF;
wherein the UE is configured to process the scheduled downlink transmission by processing the scheduled downlink transmission on the basis of the determination that the SSF in the received downlink transmission is the new SSF.

5. A computer program product, comprising instructions for implementing the steps of the method according to any one of the claims 1-3.

## Patentansprüche

1. Verfahren zur Verwendung in einer Benutzereinrichtung, UE (220 bis 240, 650), um einen neuen speziellen Unterrahmen, SSF, in einem Zeitteilungsduplex-, TDD-, Zellnetzwerk (200) zu verwenden, wobei das TDD-Zellnetzwerk (200) ein Zeitteilungs-langfristiges Evolutions-, TDD-LTE-, Netzwerk ist und wobei die UE (220 bis 240, 650) in der Lage ist, den neuen SSF zu unterstützen, wobei das Verfahren umfasst:
- Empfangen (420, 520) einer Alt-SSF-Konfigurationsbenachrichtigung von einer Basisstation, BS (210, 600), die die UE (220 bis 240, 650) bedient;
- Empfangen (440, 540) einer geplanten Downlink-Sendung mit dem neuen SSF von der BS (210, 600);
- Verarbeiten (450, 550) der geplanten Downlink-Sendung auf der Grundlage einer Annahme, dass der SSF in der geplanten Downlink-Sendung der neue SSF ist; und
- wenn der SSF in der geplanten Downlink-Sendung tatsächlich der neue SSF ist, eine Antwort (460, 560) ausgelöst werden wird, um zu der BS (210, 600) zu senden, nachdem die geplante Downlink-Sendung verarbeitet wurde;
**gekennzeichnet durch**:
- Erfassen einer Symbolenergie in dem Downlink-Pilotzeitschlitz, DwPTS, des SSF in der empfangenen Downlink-Sendung;
- falls die Symbolenergie einen Schwellenwert überschreitet, der höher als eine Symbolenergie in dem DwPTS des Alt-SSF ist, Bestimmen, dass der SSF in der empfangenen Downlink-Sendung der neue SSF ist;
wobei der Schritt (450, 550) der Verarbeitung der geplanten Downlink-Sendung umfasst: Verarbeiten der geplanten Downlink-Sendung auf der Grundlage der Bestimmung, dass der SSF in der empfangenen Downlink-Sendung der neue SSF ist.

2. Verfahren gemäß Anspruch 1, wobei der neue SSF mit einem Downlink-Planungsbefehl konfiguriert wird, der in dem Downlink-Pilotzeitschlitz, DwPTS, vorhanden ist, und der Alt-SSF nicht mit dem Downlink-Planungsbefehl in dem DwPTS konfiguriert wird, wobei, wenn der SSF in der geplanten Downlink-Sendung tatsächlich der neue SSF ist, eine Antwort (460, 560) zu der BS (210, 600) nach Verarbeitung des Downlink-Planungsbefehls in dem DwPTS des neuen SSF der geplanten Downlink-Sendung gesendet werden wird.

3. Verfahren gemäß Anspruch 2, wobei das Verfahren weiterhin umfasst:
- wenn der SSF in der geplanten Downlink-Sendung tatsächlich der Alt-SSF ist, keine Antwort zu der BS (210, 600) auf Grund des fehlenden Downlink-Planungsbefehls gesendet werden wird, der in dem Alt-SSF zu verarbeiten wäre.

4. Benutzereinrichtung, UE, die einen neuen speziellen Unterrahmen, SSF, in einem Zeitteilungsduplex-, TDD-, Zellnetzwerk verwendet, wobei das TDD-Zellnetzwerk (200) ein Zeitteilungs-langfristiges Evolutions-, TD-LTE-, Netzwerk ist und wobei die UE in der Lage ist, den neuen SSF zu unterstützen, wobei die UE umfasst:
einen Empfänger (66), der eingerichtet ist, um eine Alt-SSF-Konfigurationsbenachrichtigung von einer Basisstation, BS, die die UE bedient, zu empfangen, und eingerichtet ist, um eine geplante Downlink-Sendung mit dem neuen SSF von der BS zu empfangen;
einen Prozessor (670), der eingerichtet ist, um die geplante Downlink-Sendung auf der Grundlage einer Annahme zu verarbeiten, dass der SSF in der geplanten Downlink-Sendung der neue SSF ist;
eine Antwortschaltung (680), die eingerichtet ist, wenn der SSF in der geplanten Downlink-Sendung tatsächlich der neue SSF ist, eine Antwort zu der BS nach einer Verarbeitung der geplanten Downlink-Sendung zu senden;
**dadurch gekennzeichnet, dass** die UE konfiguriert ist, um:
- eine Symbolenergie in dem Downlink-Pilotzeitschlitz, DwPTS, des SSF in der empfangenen Downlink-Sendung zu erfassen;
- falls die Symbolenergie einen Schwellenwert überschreitet, der höher als eine Symbolenergie in dem DwPTS des Alt-SSF ist, zu bestimmen, dass der SSF in der empfangenen Downlink-Sendung der neue SSF ist;
wobei die UE konfiguriert ist, um die geplante Downlink-Sendung zu verarbeiten, indem die geplante Downlink-Sendung auf der Grundlage der Bestimmung verarbeitet wird, dass der SSF in der empfangenen Downlink-Sendung der neue SSF ist.

5. Computerprogrammprodukt, das Anweisungen umfasst, um die Schritte des Verfahrens gemäß einem der Ansprüche 1 bis 3 zu implementieren.

## Revendications

1. Procédé destiné à être utilisé dans un Equipement Utilisateur, UE (220-240, 650), pour utiliser une nouvelle sous-trame spéciale, SSF, dans un réseau cellulaire (200), à duplexage par répartition dans le temps, TDD, où le réseau cellulaire TDD (200) est un réseau d'évolution à long terme à répartition dans le temps, TD-LTE, et où l'UE (220-240, 650) est autorisé à prendre en charge la nouvelle SSF, le procédé comprenant le fait :
- de recevoir (420, 520) une notification de configuration SSF patrimoniale d'une station de base, BS (210, 600), desservant l'UE (220-240, 650) ;
- de recevoir (440, 540) une transmission de liaison descendante planifiée avec la nouvelle SSF à partir de la station de base (210, 600) ;
- de traiter (450, 550) la transmission de liaison descendante planifiée en se basant sur une hypothèse selon laquelle la SSF dans la transmission de liaison descendante planifiée est la nouvelle SSF ; et
- lorsque la SSF dans la transmission de liaison descendante planifiée est effectivement la nouvelle SSF, une réponse (460, 560) sera déclenchée pour être transmise à la BS (210, 600) après traitement de la transmission de liaison descendante planifiée ; **caractérisé par** le fait :
- de détecter l'énergie de symbole dans l'intervalle de temps pilote de liaison descendante, DwPTS, de la SSF dans la transmission de liaison descendante reçue ;
- si l'énergie de symbole dépasse un seuil supérieur à une énergie de symbole dans le DwPTS de la SSF patrimoniale, de déterminer que la SSF dans la transmission de liaison descendante reçue est la nouvelle SSF ;
dans lequel le traitement de l'étape de transmission de liaison descendante planifiée (450, 550) comprend : le traitement de la transmission de liaison descendante planifiée en se basant sur la détermination du fait que la SSF dans la transmission de liaison descendante reçue est la nouvelle SSF.

2. Procédé de la revendication 1, dans lequel la nouvelle SSF est configurée avec une commande de planification de liaison descendante présente dans l'intervalle de temps pilote de liaison descendante, DwPTS, et la SSF patrimoniale n'est pas configurée avec la commande de planification de liaison descendante dans le DwPTS, où lorsque la SSF dans la transmission de liaison descendante planifiée est effectivement la nouvelle SSF, une réponse (460, 560) sera transmise à la BS (210, 600) après traitement de la commande de planification de liaison descendante dans le DwPTS de la nouvelle SSF de transmission de liaison descendante planifiée.

3. Procédé de la revendication 2, le procédé comprenant en outre :
- lorsque la SSF dans la transmission de liaison descendante planifiée est effectivement la SSF patrimoniale, aucune réponse ne sera transmise à la BS (210, 600) en raison de l'absence de commande de planification de liaison descendante à traiter dans la SSF patrimoniale.

4. Equipement utilisateur, UE, utilisant une nouvelle sous-trame spéciale, SSF, dans un réseau cellulaire à duplexage par répartition dans le temps, TDD, où le réseau cellulaire TDD (200) est un réseau d'évolution à long terme à répartition dans le temps, TD-LTE, et où l'UE est autorisé à prendre en charge la nouvelle SSF, l'UE comprenant :
un récepteur (660) adapté pour recevoir une notification de configuration SSF patrimoniale à partir d'une station de base, BS, desservant l'UE, et adapté pour recevoir une transmission de liaison descendante planifiée avec la nouvelle SSF à partir de la BS ;
un processeur (670) adapté pour traiter la transmission de liaison descendante planifiée en se basant sur une hypothèse selon laquelle la SSF dans la transmission de liaison descendante planifiée est la nouvelle SSF ;
un circuit de réponse (680) adapté, lorsque la SSF dans la transmission de liaison descendante planifiée est effectivement la nouvelle SSF, pour transmettre une réponse à la BS après avoir traité la transmission de liaison descendante planifiée ;
**caractérisé en ce que** l'UE est configuré pour :
- détecter l'énergie de symbole dans l'intervalle de temps pilote de liaison descendante, DwPTS, de la SSF dans la transmission de liaison descendante reçue ;
- si l'énergie de symbole dépasse un seuil supérieur à une énergie de symbole dans le DwPTS de la SSF patrimoniale, déterminer que la SSF dans la transmission de liaison descendante reçue est la nouvelle SSF ;
dans lequel l'UE est configuré pour traiter la transmission de liaison descendante planifiée en traitant la transmission de liaison descendante planifiée en se basant sur la détermination du fait que la SSF dans la transmission de liaison descendante reçue est la nouvelle SSF.

5. Produit de programme informatique, comprenant des instructions pour mettre en oeuvre les étapes du procédé selon l'une quelconque des revendications 1 à 3.
